# EUROPÄISCHE PATENTANMELDUNG

(11) **EP 0 858 863 A1**
(43) Veröffentlichungstag der Anmeldung: **19.08.1998**
(21) Anmeldenummer: 98102505.9
(22) Anmeldetag: 13.02.1998
(51) Int. Cl.: B23Q 7/14, B23Q 16/02

(54) **Spielfreier, vorgespannter Einzugsnippel für ein Schnellspannsystem**

(30) Priorität: 14.02.1997 DE 19705685
(71) Anmelder: Stark, Emil, jr., A-6840 Götzis (AT)
(72) Erfinder: Stark, Emil, jr., A-6840 Götzis (AT)
(74) Vertreter: Riebling, Peter, Dr.-Ing.

(57) **Zusammenfassung**

Die Erfindung beschreibt einen Einzugsnippel für ein Schnellspannsystem, der eine erste Anlagefläche zur Befestigung an einem Bauteil, insbesondere einer Palette, aufweist und mit einer zweiten Anlagefläche zur Aufnahme in einem Schnellspannsystem versehen ist, wobei die zweite Anlagefläche radial federnd ausgebildet ist.

## Beschreibung

Gegenstand der Erfindung ist ein spielfreier, vorgespannter Einzugsnippel für ein Schnellspannsystem nach dem Oberbegriff des Patentanspruchs 1. Ein derartiges Schnellspannsystem ist beispielsweise mit der auf dem gleichen Anmelder zurückgehenden DE 41 35 418 A1 bekannt geworden.

Bei diesem bekannten Schnellspannsystem wird eine Lochraster-Palette, welche geeignet ist, entsprechende Spannwerkzeuge zur Halterung von Werkstücken aufzunehmen, in einem sogenannten Schnellspannsystem auswechselbar gespannt und gehalten.

Hierbei sind an der Unterseite der Lochraster-Palette einer oder mehrere Einzugsbolzen oder Einzugsnippel angeordnet, die in zugeordnete Aufnahmen in mehrere parallel zueinander angeordnete Schnellspannzylinder eingreifen und dort kraft- und formschlüssig spannbar sind.

Damit ist es also möglich, eine derartige Lochraster-Palette auf schnelle und einfache Weise praktisch spielfrei auf dem Schnellspannsystem zu halten und hierzu werden sogenannte Einzugsbolzen verwendet, die an der Unterseite der Lochraster-Palette angeordnet sind und die mit dem vorher genannten Schnellspannsystem zusammenwirken.

Bei dem bekannten Schnellspannsystem bestehen Probleme während der Bearbeitung von auf der Lochraster-Palette gehaltenen Werkstücken, welche in unzulässiger Weise durch Stöße der Bearbeitungswerkzeuge beschädigt werden. Diese Beschädigungsstöße werden auf die Lochraster-Palette weitergeleitet und schließlich in den mit der Lochraster-Palette möglichst spielfrei verbundenen Einzugsbolzen, welcher seinerseits diese Stöße auf das Spannsystem weitergibt. Es hat sich gezeigt, dass bei sehr starken Beschädigungsstößen diese Kräfte zu einer Beschädigung des Einzugsbolzens, insbesondere im Eingriffsbereich mit dem Schnellspannzylinder führen. Dies führt zu einer Ungenauigkeit des Einzugsbolzens, nämlich zu einer teilweisen Deformierung am Umfangsrand dieses Einzugsbolzens, was mit herkömmlichen Messinstrumenten nicht ohne weiteres festgestellt werden kann. Der Einzugsbolzen schlägt sich damit in seiner Passbohrung im Schnellspannzylinder los, erhält dort unzulässiges Spiel, und damit ist die Genauigkeit der Positionierung der zu bearbeitenden Werkstücke auf der Lochraster-Palette in Frage gestellt.

Statt der vorher erwähnten Lochraster-Palette können selbstverständlich auch andere Vorrichtungen verwendet werden, die mit den gegenständlichen Einzugsbolzen ausgerüstet sind, wie z. B. Sondervorrichtungen.

Wichtig ist nur, dass bei der Verwendung von derartigen Schnellspannsystemen die Gefahr besteht, dass der Einzugsbolzen in seinem Eingriffsbereich in das Schnellspannsystem beschädigt wird, wenn entsprechende Beschädigungsstöße in die Lochraster-Palette oder die Sondervorrichtung eingeleitet werden.

Nach einem weiteren Merkmal der älteren Patentanmeldung war stets ein gewisses Grundspiel zwischen dem Umfangsrand des Einzugsbolzens und dem zugeordneten Führungsrand (Deckel) des Schnellspannsystems vorhanden. Dieses Grundspiel ist herstellungstechnisch bedingt vorhanden und beträgt etwa 2/1000 bis 3/1000 Millimeter.

In vielen Anwendungsfällen ist es jedoch nicht erwünscht, ein derartiges Spiel zu haben, nämlich dann, wenn es darum geht, vollkommen spielfrei zu arbeiten. Dies spielt bei der Herstellung hochpräziser Teile eine wesentliche Rolle.

Der Erfindung liegt deshalb die Aufgabe zugrunde, einen Einzugsbolzen für ein Schnellspannsystem der eingangs genannten Art so weiterzubilden, dass Beschädigungsstöße auf die mit dem Einzugsbolzen verbundene Lochraster-Palette oder Sondervorrichtung nicht mehr zu einer Beschädigung dieses Einzugsbolzens in seinem Eingriff im Schnellspannsystem führen. Ferner besteht die Aufgabe, bedarfsweise den Einzugsnippel in seinem Einzugsbereich im Schnellspannsystem spielfrei auszugestalten.

Zur Lösung der gestellten Aufgabe dient die Erfindung nach der technischen Lehre des Anspruches 1.

Wesentlich hierbei ist, dass die Anlagefläche des Einzugsnippels, die zur Aufnahme in einem Schnellspannsystem dient, in radialer Richtung federnd ausgebildet ist.

Bevorzugt besteht der Einzugsbolzen im wesentlichen aus einem Grundkörper, der einen ringförmigen Flansch größeren radialen Durchmessers aufweist, wobei der Umfangsrand dieses Ringflansches größer ausgebildet ist als die Bohrung, in welcher der Umfangsrand dieses Ringflansches aufgenommen ist, und der Ringflansch in radialer Richtung federnd ausgebildet ist.

Mit der gegebenen technischen Lehre der vorliegenden Erfindung wird also ein vollkommen neuartiger Einzugsbolzen vorgeschlagen, der einen Ringflansch aufweist, dessen äußerer Umfangsrand in radialer Richtung federnd ausgebildet ist. Eine derartige federnde Kraft kann beispielsweise dadurch erreicht werden, dass den Ringflansch schwächende Bohrungen im Bereich des Ringflansches angeordnet sind, welche Bohrungen einen geringfügigen Abstand zu dem außen umlaufenden Umfangsrand haben, so dass dieser Rand durch die Bohrungen in seiner Materialstärke geschwächt wird.

Derartige Bohrungen können gleichmäßig am Umfang verteilt, punktförmig am Ringflansch angeordnet werden. Diese Bohrungen sind bevorzugt als Sackbohrungen ausgebildet.

In einer anderen Ausgestaltung der Erfindung ist es vorgesehen, dass eine durchgehende, umlaufende Ringnut vorgesehen ist, die auch als Vorspannnut bezeichnet wird.

Damit gelingt es nun erstmals, diesen Ringflansch des Einzugsbolzen spielfrei zu der ihm zugeordneten Bohrung zu gestalten, denn der Einzugsbolzen wird unter Zugkraft des Schnellspannsystems in diese feststehende Bohrung des Schnellspannsystems eingezogen und aufgrund dieser Zugkraft klappt dann der materialgeschwächte Umfangsrand in radialer Richtung einwärts, wodurch sich der effektive Umfang dieses Umfangsrandes vermindert und sich hierbei der Ringflansch spielfrei an der zugeordneten Innenbohrung des Schnellspannsystems anlegt.

Mit dem kraftschlüssigen Einziehen eines Einzugsbolzens in eine zugeordnete Aufnahmebohrung eines Schnellspannsystems ergibt sich gleichzeitig der Vorteil, dass aufgrund dieser erhöhten Reibung des Ringflansches am Innenumfang der Bohrung des Schnellspannsystems auch die Einzugskraft erhöht wird. Das heißt also, der Einzugsbolzen ist gegen Herausreißen aus dieser Bohrung des Schnellspannsystems aufgrund seiner reibschlüssigen Anlage im Bereich dieser Bohrung besser geschützt.

In einer Weiterbildung der vorliegenden Erfindung ist es vorgesehen, dass der vorher erwähnte federnde Umfangsrand (der durch entsprechende Materialschwächungen im Bereich des Ringflansches erreicht wird) durch zusätzliche Flächen armiert wird.

Im allgemeinen Beschreibungsteil wurde darauf hingewiesen, dass eine Beschädigung des Einzugsbolzens dann stattfindet, wenn unzulässige Stöße über die Lochraster-Palette auf den Einzugsbolzen und von diesem auf die zugeordnete Bohrung des Schnellspannsystems übertragen wird.

Um eine derartige Beschädigung dieses Feder vorgespannten Umfangsrandes zu vermeiden, ist erfindungsgemäß vorgesehen, dass dem Ringflansch ein weiterer Ringflansch zugeordnet ist, der eine gegenüber dem ersten materialgeschwächten und federnd ausgebildeten Umfangsrand zurückspringende weitere Umfangsflache aufweist, die um wenige 1/1000 Millimeter hinter dem ersten, federnden Umfangsrand sitzt.

Damit ergibt sich der Vorteil, dass zunächst Bearbeitungsstöße von der Lochraster-Palette auf den federnden Umfangsrand des Ringflansches übertragen werden, und, wenn die entsprechende federnde Materialverformung dieses Ringflansches stattgefunden hat, wird dann dieser Stoß (abgeschwächt) auf eine starre Umfangsfläche eines zweiten Ringflansches abgeleitet.

Alternativ kann eine entsprechende Armierung auch an demselben Ringflansch angeordnet sein. Hier bietet es sich an, den Umfangsrand nur stellenweise federnd auszubilden und geringfügig radial einwärts versetzt starre Flächen vorzusehen. Bei einer Verformung des Umfangsrandes legen sich dann diese starren Flächen an der zugeordneten Anlagefläche des Schnellspannsystemes an und verhindern eine weitere Verformung des Umfangsrandes.

Damit ergibt sich der wesentliche Vorteil, dass Beschädigungen dieses ersten, äußeren Ringflansches auf jeden Fall vermieden werden können, weil dieser sozusagen durch eine weitere Umfangsfläche, armiert und geschützt ist.

Die Erfindung ist im übrigen nicht auf einen einteiligen Einzugsbolzen beschränkt, sondern es können mehrteilige Einzugsbolzen verwendet werden, wobei der Einzugsbolzen bevorzugt aus einem Oberteil, einem Unterteil und einer am Unterteil angeordneten Scheibe besteht.

Die Anordnung des Ringflansches kann hierbei einteilig mit dem Grundkörper des Einzugsbolzens erfolgen; es kann der Ringflansch aber auch als gesondertes Teil mit dem Oberteil lösbar verbunden werden, oder der Ringflansch kann auch mit dem Unterteil ein- oder zweistückig verbunden sein.

Bei der Verwendung eines mehrteiligen Einzugsbolzens bzw. Einzugsnippels kann die zur Verbindung der Einzelteile benötigte Einrichtung, z. B. eine Schraube, gleichzeitig zur Fixierung des Einzugsbolzens an der zu spannenden Palette dienen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Einzugsbolzen in eine erste Ausführungsform;
- Figur 2:: Schnitt durch eine zweite Ausführungsform;
- Figur 3:: Schnitt durch eine dritte Ausführungsform;
- Figur 4:: Schnitt durch eine vierte Ausführungsform;
- Figur 5:: Schnitt durch eine fünfte Ausführungsform;
- Figur 6:: Schnitt durch eine sechste Ausführungsform;
- Figur 7:: Schnitt durch eine siebte Ausführungsform;
- Figur 8:: die Draufsicht auf die Ausführung nach Figur 7 in Pfeilrichtung VIII;
- Figur 9:: Schnitt durch eine achte Ausführungsform;
- Figur 10:: die Draufsicht auf Figur 9 in Pfeilrichtung X;
- Figur 11:: Schnitt durch eine neunte Ausführungsform;
- Figur 12:: Draufsicht auf Figur 11 in Pfeilrichtung XII.

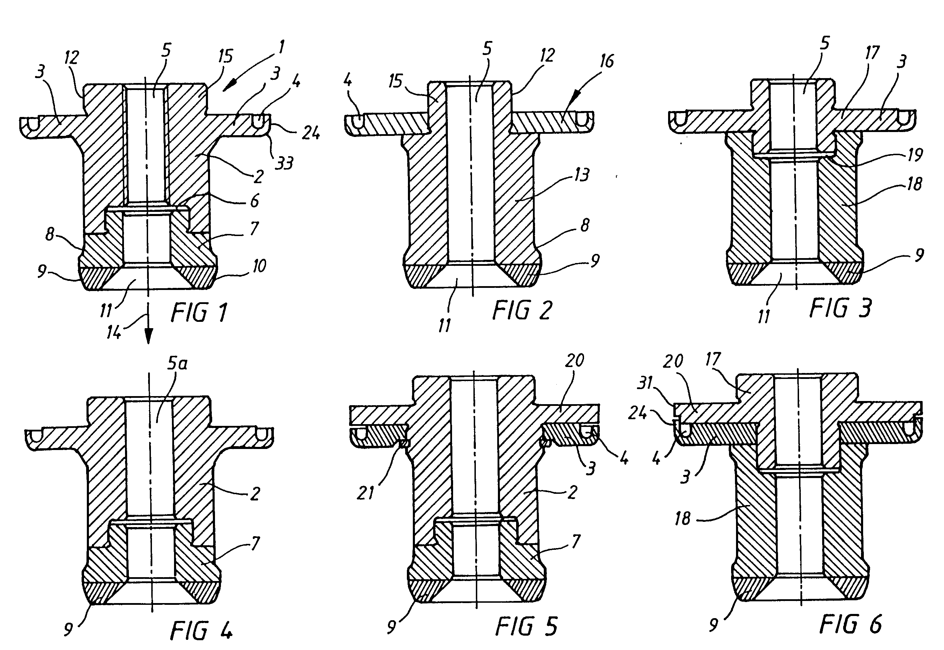

Der Einzugsbolzen 1 nach Figur 1 besteht im wesentlichen aus einem Oberteil 2, welches aus einem Federstahlband gebildet ist. Dieses Oberteil 2 ist werkstoffeinstückig mit einem Ringflansch 3 verbunden, welcher umläuft und in seinem äußeren Bereich eine sogenannte Vorspannnut 4 aufweist.

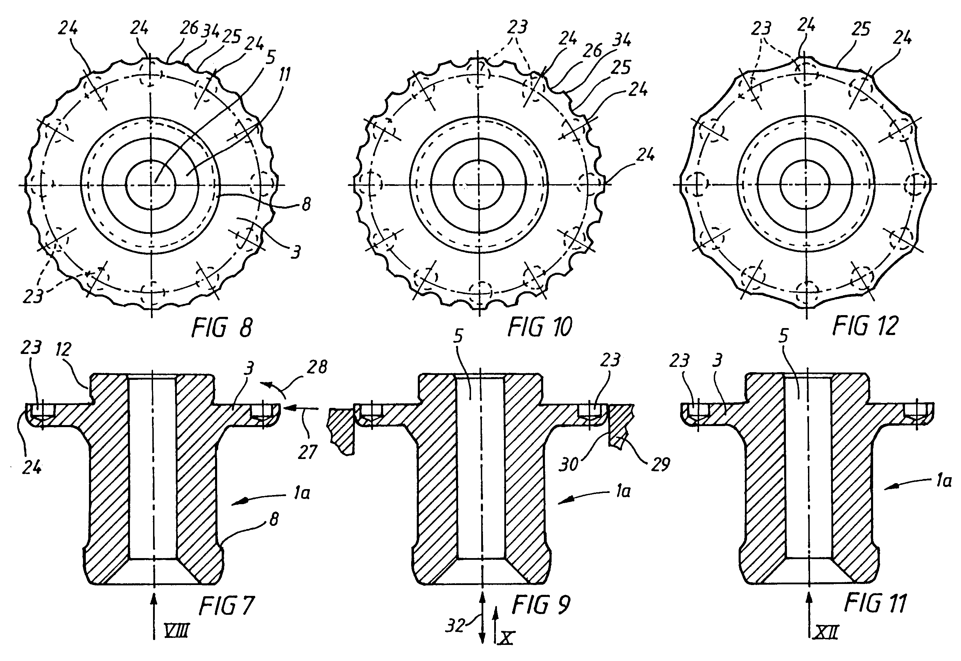

Wichtig ist, dass der Umfangsrand 24 dieses Ringflansches 3 nun federnd ausgebildet ist. Es wird hierzu auf die Erläuterungen nach Figur 7 und 9 verwiesen. Dort ist erkennbar, dass der Umfangsrand 24 in eine Bohrung eines Schnellspannsystems eingesetzt wird, welche eine innere Passfläche 30 aufweist, und diese Bohrung ist Teil des feststehenden Deckels dieses Schnellspannverschlusses. Der Einzugsbolzen 1 wird also in Pfeilrichtung 32 (nach unten) in diese Bohrung des Deckels 29 in den Bereich dieser Passfläche 30 eingezogen.

Hierbei wird demzufolge auf den Ringflansch 3, der in Einzugsrichtung (Pfeilrichtung 14, 32) einen Radius 33 aufweist, eine Kraft in Pfeilrichtung 27 ausübt, welche diesen Umfangsrand in Pfeilrichung 28 radial einwärts umklappen lässt.

Wichtig ist also, dass die Vorspannnut 4 von oben her offen ist, um den Umfangsrand 24 zu schwächen und dass der Ringflansch 3 aus einem federnden Material, bevorzugt Federstahl, ausgebildet ist.

Die Figur 1 zeigt im übrigen, dass dem Oberteil 2 ein Unterteil 7 aus einem Werkzeugstahl zugeordnet ist, wobei das Unterteil 7 in einer Aufnahme 6 des Oberteils 2 aufgenommen ist. Diese Aufnahme ist bevorzugt stufig ausgebildet, um einen formschlüssigen Sitz der beiden Teile ineinander zu gewährleisten.

An der Unterseite des Unterteils 7 ist eine Scheibe 9 angeordnet. In die keglig ausgebildete Ausnehmung 11 greift ein nicht näher dargestellter Kopf einer Senkkopfschraube, welche in die als Gewindebohrung ausgebildete Mittenbohrung 5 eingeschraubt ist. Auf diese Weise werden die drei Teile 9, 7, 2 zueinander gehalten.

Damit der Einzugsbolzen 1 ohne Beschädigung in die zugeordnete Bohrung im Deckel 29 eingezogen werden kann ist an der Unterseite der Scheibe 9 noch eine Einführschräge 10 vorgesehen.

Die Figur 2 zeigt einen ähnlichen Einzugsbolzen wie Figur 1, bei dem das Oberteil 13 aus einem Werkzeugstahl besteht und lediglich der Ringflansch 16 aus einem Federstahlmaterial. Der Ringflansch 16 ist hierbei auf einen Ansatz 15 des Oberteils 13 aufgeschrumpft und demzufolge kraft- und formschlüssig mit diesem verbunden. Es kommt auch jede andere geeignete Verbindungsart in Betracht.

Es wird noch darauf hingewiesen, dass die im Bereich des Ansatzes 15 angeordnete Nullpunkt-Passfläche 12 dazu dient, diesen Einzugsbolzen 1 in einer zugeordneten Nullpunkt orientierten Bohrung der Lochraster-Palette spielfrei zu verankern und festzulegen.

Es ist erkennbar, dass die Ringnut 8, in welche die Kugeln des Einzugssystems eingreifen und eine Zugkraft nach unten ausüben im Bereich des Unterteils 7 angeordnet sind, während die gleiche Ringnut 8 nach Figur 2 im Bereich des Oberteils 13 angeordnet ist.

Die Figur 3 unterscheidet sich von den vorher genannten Ausführungsbeispielen dadurch, dass der dort gezeigte Einzugsbolzen aus einem Ringflansch 3 besteht, der werkstoffeinstückig mit einem aus Federstahl bestehenden Oberteil 17 ausgebildet ist, wobei die Zuordnung zu dem Unterteil 18 im Bereich einer oben liegenden Aufnahme 19 erfolgt (ausbildung spiegelbildlich zu Figur 1).

Die genannten Teile sind wiederum durch die nicht näher dargestellte Senkkopfschraube miteinander verbunden, welche durch die als Durchgangsbohrung ausgebildete Mittenbohrung 5 hindurchgreift und in einer nicht näher dargestellten Gewindebohrung an der Unterseite der Lochraster-Palette eingeschraubt ist.

Die Figur 4 zeigt im Vergleich zur Figur 1 die gleichen Teile, wobei lediglich statt der Gewindebohrung in Figur 1 eine Durchgangsbohrung 5a in Figur 4 dargestellt ist.

Die zur Verbindung der Teile 2, 7, 9 dienende Schraube kann dann gleichzeitig zur Befestigung des Einzugsbolzens 1 an einer Palette und/oder einen weiteren, gegenüberliegenden Einzugsbolzen dienen.

Die Figur 5 und 6 zeigen nun die Armierung des federnden Umfangsrandes 24 durch eine weitere, starre Passfläche 31, die im Bereich eines Ringflansches 20 angeordnet ist. Die Passfläche 31 des oberen Ringflansches 20 springt hinter dem federnden Umfangsrand 24 des Ringflansches 3 radial etwas zurück, so dass die entsprechende Eingzugskraft zunächst auf den Umfangsrand 24 ausgeübt wird, der dann in Pfeilrichtung 28 nach innen schwenkt und sich kraft- und formschlüssig an der Passfläche 30 des Deckels 29 anlegt, wobei die Passfläche 31 des Ringflansches 20 noch ein geringes Spiel zu der Passfläche 30 im Deckel 29 aufweist.

Entsprechende Beschädigungsstöße, die auf den Umfangsrand 24 ausgeübt werden, werden zunächst von diesem aufgenommen. Bei Überschreitung einer gewissen Formveränderung, die durch eine Verschiebung des Einzugsbolzens 1 gegenüber dem Deckel 29 entsteht, werden diese Stöße dann von dem Ringflansch 20 und dessen Passfläche 31 aufgenommen. Damit wird also der Umfangsrand 24 vor Beschädigungen geschützt.

Die Figur 5 und 6 zeigt, dass der Ringflansch 3 mit Hilfe eines Segerrings 21 an dem Oberteil 2 gelagert werden kann oder - wie in Figur 6 dargestellt - zwischen dem Oberteil 17 und dem Unterteil 18 eingeklemmt werden kann.

Die Figuren 7 bis 12 zeigen im übrigen, dass die Schwächung des Umfangsrandes 24 nicht nur durch eine umlaufende Vorspannnut 4 erreicht werden kann, sondern auch durch punktförmige, am Umfang des Ringflansches 3 angeordnete Sackbohrungen 23.

Hier ist in Figur 7 und 8 dargestellt, dass die Sackbohrungen im gegenseitigen Abstand gleichmäßig am Umfang des Ringflansches 3 verteilt angeordnet sind, wobei dazwischen liegende ausgesparte Bereiche vorhanden sind. Es sind sogenannte Freiräume 25, 26 als rundprofilierte, radial zurückspringende Flächen am Außenumfang des Ringflansches 3 eingearbeitet ist.

Im Ausführungsbeispiel nach den Figuren 7, 8 sind zwei etwa gleichförmige Freiräume 26 zwischen den Sackbohrungen 23 angeordnet. Der federnde Umfangsrand 24 ist direkt benachbart zu der jeweiligen Sackbohrung 23 angeordnet, aber nur auf jedem zweiten oder dritten Vorsprung ausgebildet. Die anderen Vorsprünge sind als Freiflächen 34 ausgebildet, die gegenüber dem Umfangsrand 24 um wenigste 1/1000 Millimeter radial einwärts versetzt sind. Diese Freiflächen sind nicht federnd, sondern im wesentlichen starr ausgebildet.

Dies bedeutet, dass zunächst an der Innenseite der Passfläche 30 die Umfangsränder 24 zur Anlage kommen und dass die dahinter zurückspringenden Freiflächen 34 einen geringfügig kleineren Durchmesser aufweisen, so dass sie ein um wenige 1/1000 Millimeter bestehendes Spiel zu der Passfläche 30 aufweisen. Hieraus ergibt sich wiederum die Armierungsfunktion dieser Freiflächen 34 im Bezug auf den Umfangsrand 24. Ein auf den federnden Umfangsrand 24 ausgeübter Beschädigungsstoß wird von diesem zunächst einmal bis zu einer gewissen Verformungsgrenze aufgenommen und bei noch stärkerer Beschädigung wirkt die dahinterliegende Freifläche 34 als Anschlagsbegrenzung.

Anstatt des Begriffes 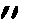 Beschädigungsstoß" kann auch der Begriff 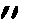 Überlastungsstoß" verwendet werden. Wenn nämlich derartige Armierungsflächen zum Schutz der federnd ausgebildeten Umfangsränder 24 nicht vorhanden sind, dann kann es in manchen Fällen zu einer bleibenden Verformung dieser Umfangsränder kommen, was mit der technischen Lehre nach der Erfindung ausgeschlossen wird.

Aufgrund dieser Armierung wird also eine ausgezeichnete Wiederholgenauigkeit der Passung erreicht, auch wenn das gesamte Einspannsystem durch schwere Stöße belastet wurde.

Die Figuren 9 und 10 zeigen eine Abwandlung des Ausführungsbeispiels nach Figur 7 und 8, wo erkennbar ist, dass zwischen den Feder vorgespannten Umfangsrändern 24 lediglich Freiräume 25 mit tieferem Radius vorgesehen sind, wobei aber ebenfalls die vorher erwähnten Freiflächen 34 vorhanden sind, die als Armierungsflächen für die federnden Umfangsränder 24 dienen.

Die Figuren 11 und 12 zeigen, dass eine derartige Armierung auch entfallen kann, so dass die Freiflächen 34 entfallen.

Derartige Einzugsnippel 1a nach den Figuren 11 und 12 werden dann verwendet, wenn ein derartiges Schnellspannsystem für Messmaschinen eingesetzt wird, bei dem mit Überlastungsstößen nicht zu rechnen ist.

Insgesamt wird mit dem Gegenstand der vorliegenden Erfindung eine spielfreie Einzugsmöglichkeit für Einzugsnippel in ein Schnellspannsystem geschaffen. In einer Weiterbildung ist es möglich, Beschädigungen auf unzulässige Stöße zu vermeiden.

### ZEICHNUNGSLEGENDE

- 1: Einzugsbolzen 1a
- 2: Oberteil
- 3: Ringflansch
- 4: Vorspannnut
- 5: Mittenbohrung 5a
- 6: Aufnahme
- 7: Unterteil
- 8: Ringnut
- 9: Schütze
- 10: Einführschräge
- 11: Ausnehmung (f. Senkkopfschraube)
- 12: Nullpunkt-Passfläche
- 13: Oberteil
- 14: Pfeilrichtung
- 15: Ansatz
- 16: Ringflansch
- 17: Oberteil
- 18: Unterteil
- 19: Aufnahme
- 20: Ringflansch
- 21: Seegering
- 22:
- 23: Sackbohrung
- 24: Umfangsrand
- 25: Freiraum
- 26: "
- 27: Pfeilrichtung
- 28: "
- 29: Deckel (Schnellspannverschluss)
- 30: Passfläche
- 31: "
- 32: Pfeilrichtung
- 33: Radius
- 34: Freifläche

## Patentansprüche

1. Einzugsnippel für ein Schnellspannsystem, der eine erste Anlagefläche zur Befestigung an einem Bauteil, insbesondere einer Palette, aufweist und mit einer zweiten Anlagefläche zur Aufnahme in einem Schnellspannsystem versehen ist, **dadurch gekennzeichnet**, dass die zweite Anlagefläche (24) radial federnd ausgebildet ist.

2. Einzugsnippel nach Anspruch 1, **dadurch gekennzeichnet**, dass die Anlagefläche als Umfangsrand (24) eines Ringflansches (3, 16) ausgebildet ist.

3. Einzugsnippel nach Anspruch 1 oder 2, **dadurch gekennzeichnet**, dass die Anlagefläche (24) mit einer Ringnut (4) oder Anzahl von Bohrungen (23) versehen ist.

4. Einzugsnippel nach Anspruch 3, **dadurch gekennzeichnet**, dass die Bohrungen als Sackbohrungen (23) ausgebildet sind.

5. Einzugsnippel nach Anspruch 3 oder 4, **dadurch gekennzeichnet**, dass die Bohrungen (23) gleichmäßig über den Umfang der Anlagefläche (24) verteilt sind.

6. Einzugsnippel nach einem der Ansprüche 1 bis 5, **dadurch gekennzeichnet**, dass eine Armierung (31, 34) der Anlagefläche (24) vorgesehen ist.

7. Einzugsnippel nach Anspruch 6, **dadurch gekennzeichnet**, dass die Armierung als radial einwärts zur Anlageflache (24) liegende ein- oder mehrteilige Fläche (31, 34) ausgebildet ist.

8. Einzugsnippel nach Anspruch 6 oder 7, **dadurch gekennzeichnet**, dass die Armierung (31, 34) an dem Bauteil (3, 16) vorgesehen ist, das die Anlagefläche (24) trägt, oder an einem getrennten Bauteil (20).

9. Einzugsnippel nach einem der vorhergehenden Ansprüche, **dadurch gekennzeichnet**, dass der Einzugsnippel (1, 1a) mehrteilig ausgebildet ist.

10. Einzugsnippel nach Anspruch 9, **dadurch gekennzeichnet**, dass die zur Verbindung der Einzelteile (2, 7, 9; 17, 18, 9) dienende Einrichtung gleichzeitig zur Festlegung des Einzugsnippels (1, 1a) an dem zu spannenden Bauteil dient.
